# EUROPEAN PATENT APPLICATION

(11) **EP 3 402 120 A2**
(43) Date of publication of application: **14.11.2018**
(21) Application number: 18170796.9
(22) Date of filing: 04.05.2018
(51) Int. Cl.: H04L 12/18

(54) **METHODS, APPARATUSES AND COMPUTER-READABLE MEDIUMS FOR MANAGING MULTICAST CHANNELS IN ACCESS NETWORKS**

(30) Priority: 08.05.2017 US 201715589419
(71) Applicant: Alcatel-Lucent USA Inc., Murray Hill, NJ 07974-0636 (US)
(72) Inventor: AKHTAR, Shahid, Murray Hill, NJ New Jersey 07974-0636 (US); SHARPE, Randy, Murray Hill, NJ New Jersey 07974-0636 (US)
(74) Representative: Bryers LLP

(57) **Abstract**

A client device (102, 104, 106, 108A and 108B) is configured to: receive a list of multicast channels from a multicast controller (100), the list of multicast channels identifying multicast channels to be multicast to a plurality of clients in the access network (AN1, AN2, AN3); receive an updated list of multicast channels from the multicast controller; identify differences between the list of multicast channels and the updated list of multicast channels; and inform the termination node of differences between the list of multicast channels and the updated list of multicast channels.

## Description

### BACKGROUND

### Field

One or more example embodiments relate to methods, apparatuses or computer-readable mediums for managing multicast channels in access networks.

### Discussion of Related Art

Adaptive Bit Rate (ABR) video is used to provide video streaming services to end users via Internet Protocol (IP) networks such as the Internet. ABR video adapts video transmission to conditions of the path or paths available to the client, and produces as good a quality video as allowed by the network. However, ABR generally requires a separate stream for each client. So, as the number of clients grows, the bandwidth required to support the video transmission within the network grows similarly. Additionally, ABR video cannot guarantee a certain video quality (VQ), or that ABR video would be free of buffering events in which video stops playing due to network conditions.

Multicast Adaptive Bit Rate (m-ABR) is a technology in which higher VQ levels of at least some of the more popular channels (or streams) are sent via multicast to all clients who cache chunks of video content. The local caches at the clients are generally relatively small, but sufficient for live traffic. If an end user requests chunks of video content for a channel, which happen to be in the local cache at the client, then the chunks of content are served to the end user from the client. Otherwise, the chunks of content are "proxied" from a content provider through, for example, a content delivery network (CDN).

### SUMMARY

At least one example embodiment provides a client device in an access network, which terminates on a core network via a termination node, the client device including: a memory storing computer-readable instructions; and one or more processors coupled to the memory. The one or more processors are configured to execute the computer-readable instructions to: receive a list of multicast channels from a multicast controller, the list of multicast channels identifying multicast channels to be multicast to a plurality of clients in the access network; receive an updated list of multicast channels from the multicast controller; identify differences between the list of multicast channels and the updated list of multicast channels; and inform the termination node of differences between the list of multicast channels and the updated list of multicast channels.

At least one other example embodiment provides an access node configured to communicate with a northbound node and an access network, the access node comprising: a memory storing computer-readable instructions; and one or more processors coupled to the memory. The one or more processors are configured to execute the computer-readable instructions to: identify a request for a multicast channel within the access network, from a client in the access network; determine that the multicast channel is in a list of multicast channels for the access network, in response to identifying the request for the multicast channel within the access network; and stream the multicast channel to the client in the access network based on the determination that the multicast channel is in the list of multicast channels for the access network.

At least one other example embodiment provides a client device in an access network, the client device comprising: a local cache; a memory storing computer-readable instructions; and one or more processors coupled to the memory. The one or more processors are configured to execute computer-readable instructions to: determine that a requested chunk of video content is not present in the local cache; determine a multicast channel corresponding to requested chunk of video content; determine that the multicast channel is in a list of multicast channels, the list of multicast channels identifying multicast channels to be multicast to a plurality of clients in the access network; and issue a request for the multicast channel based on determining that the multicast channel is in the list of multicast channels.

### BRIEF DESCRIPTION OF THE DRAWINGS

The present invention will become more fully understood from the detailed description given herein below and the accompanying drawings, wherein like elements are represented by like reference numerals, which are given by way of illustration only and thus are not limiting of the present invention.
FIG. 1 is a network architecture according to an example embodiment.
FIG. 2 is a flowchart illustrating an example embodiment of a method for managing multicast channels in an access network.
FIG. 3 is a flowchart illustrating an example embodiment of a method for operating a client for managing multicast channels in a non-shared media access network.
FIG. 4 is a flowchart illustrating an example embodiment of a method for operating a Digital Subscriber Line Access Multiplexer (DSLAM) for managing multicast channels in a non-shared media access network.
FIG. 5 provides a general architecture and functionality suitable for implementing functional elements, or portions of functional elements, described herein.
FIG. 6 is a flowchart illustrating another example embodiment of a method of operating a client for managing multicast channels in an access network.
FIG. 7 is a simplified block diagram illustrating a network architecture according to another example embodiment.
FIG. 8 is a flow chart illustrating an example embodiment of a method for managing multicast channels at a Software Defined Networking (SDN) controller.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. This invention may, however, be embodied in many alternate forms and should not be construed as limited to only the embodiments set forth herein.

Accordingly, while example embodiments are capable of various modifications and alternative forms, the embodiments are shown by way of example in the drawings and will be described herein in detail. It should be understood, however, that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

In the following description, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing clients, client devices, routers, gateways, nodes (e.g., access nodes, termination nodes, northbound nodes, or the like), controllers, computers, cloud based servers, web servers, application servers, etc. As discussed later, such existing hardware may include, *inter alia,* one or more Central Processing Units (CPUs), system-on-chip (SOC) devices, digital signal processors (DSPs), application-specific-integrated-circuits, field programmable gate arrays (FPGAs) computers or the like.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium", "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable means including memory sharing, message passing, token passing, network transmission, etc.

The terms "including" and/or "having", as used herein, are defined as comprising (i.e., open language). The term "coupled", as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, clients, client devices, routers, gateways, nodes (e.g., termination nodes, access nodes, northbound nodes, or the like), controllers, computers, cloud based servers, web servers, application servers, etc., may be (or include) hardware, firmware, hardware executing software or any combination thereof. Such hardware may include one or more Central Processing Units (CPUs), system-on-chip (SOC) devices, digital signal processors (DSPs), application-specific-integrated-circuits (ASICs), field programmable gate arrays (FPGAs) computers or the like configured as special purpose machines to perform the functions described herein as well as any other well-known functions of these elements. In at least some cases, CPUs, SOCs, DSPs, ASICs and FPGAs may generally be referred to as processing circuits, processors and/or microprocessors.

The clients, client devices, routers, gateways, nodes, controllers, computers, cloud based servers, web servers, application servers, etc., may also include various interfaces including one or more transmitters/receivers connected to one or more antennas, a computer readable medium (including a local cache), and (optionally) a display device. The one or more interfaces may be configured to transmit/receive (wireline and/or wirelessly) data or control signals via respective data and control planes or interfaces to/from one or more network elements, such as switches, gateways, nodes, controllers, servers, clients, client devices, etc.

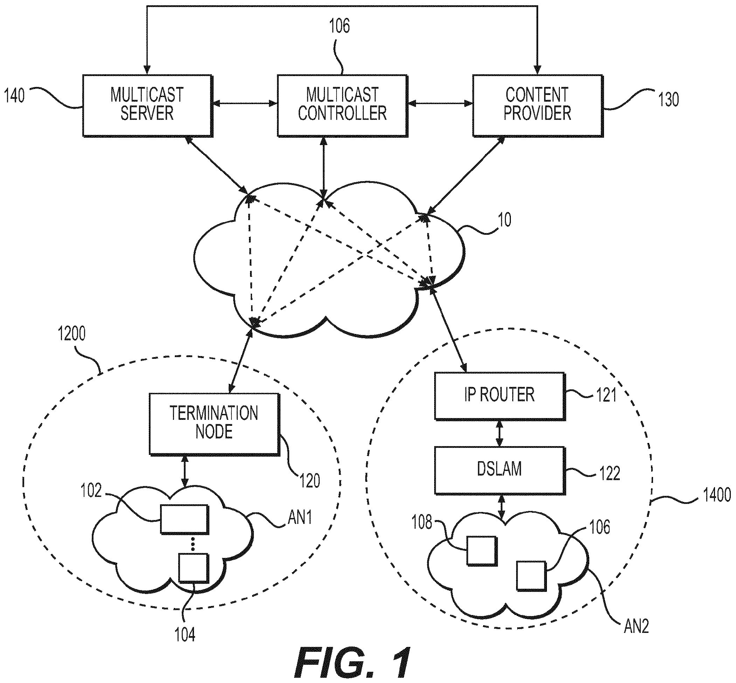

FIG. 1 is a diagram illustrating a network architecture according to an example embodiment.

Referring to FIG. 1, the network architecture includes a multicast controller 100, a multicast server 140, a content provider 130, a shared media access network portion 1200, and a non-shared media access network portion 1400. The multicast controller 100, the multicast server 140, the content provider 130, the shared media access network portion 1200, and the non-shared media access network portion 1400 are connected to, and configured to communicate via, an IP network 10 (e.g., the Internet).

As shown in FIG. 1, the shared media access network portion 1200 includes a termination node 120 and an access network AN1, whereas the non-shared media access network portion 1400 includes an IP router (also referred to herein as a northbound node) 121, which may also be part of the IP network as mentioned earlier, a Digital Subscriber Line Access Multiplexer (DSLAM) 122, and a DSL network AN2.

The multicast controller 100 may communicate with the content provider 130 and the multicast server 140 via various interfaces, which are well-known in the art. The content provider 130 and the multicast server 140 may also communicate with one another via various well-known interfaces. The multicast controller 100 may also communicate with each of the clients in an access network.

The content provider 130 (also sometimes referred to as an origin server) is a server that provides content (e.g., video content) in response to content requests from clients (or client devices), such as embedded multicast clients in access networks. For example, the content provider 130 may store content corresponding to one or more videos, which may be requested by a client for streaming to an end user (or end user device). In this case, the content provider 130 may receive requests for video content for a particular channel (or stream), and respond to the requests by providing the requested content. The requested content may be provided in the form of chunks of video (e.g., in the 2 to 10 second range) encoded at different transmission rates. These chunks of video are sometimes referred to as assets. Though, for the purpose of simplicity, only one content provider 130 is illustrated in FIG. 1, any number of content providers may be included in the network. In one example, the content provider 130 may deliver the content to a client at an end user via unicast adaptive bitrate (e.g., unicast ABR) transmission or via multicast ABR transmission. Although not explicitly shown in FIG. 1, a content delivery network CDN may be between the content provider 130 and the IP network 10. Alternatively, the content provider 130 may be, or be part of, a CDN. A CDN is a distributed network of proxy servers deployed in multiple data centers, which are configured to serve content to end users with relatively high availability and/or relatively high performance.

The multicast server 140 is a server that delivers content from the content provider 130 to clients via multicast transmission according to decisions made by the multicast controller 100. In one example, the multicast server 140 acquires content (e.g., chunks of video) from the content provider 130, and transmits the acquired content via multicast transmission as directed by the multicast controller 100. Example functions of the multicast server 140 include: acquiring content from the content provider 130; processing the acquired content; and streaming the processed content to clients via multicast transmission. In streaming the processed content, a multicast server 140 sends multicast streams using multicast addresses for content and/or bit rate combinations, transmits packets into appropriate multicast groups, controls output packet rates, and marks packets with appropriate Differentiated Services Code Point (DSCP) value.

The multicast controller 100 is a device that controls availability channels (or streams) for multicast (e.g., multicast ABR (m-ABR)) by the multicast server 140 into a given access network. The multicast controller 100 also determines how to map content to multicast groups, and provides lists of channels available (or allowed) for multicast transmission within a particular access network.

In one example, the multicast controller 100 receives notification of the requests for chunks of content for a particular channel that are not available locally at a client in an access network. Each request includes a Uniform Resource Locator (URL) or Uniform Resource Identifier (URI) for the requested channel. Based on these requests received over time, the multicast controller 100 may track a number of clients (e.g., each with its own IP addresses) currently tuned into and/or requesting each of the channels.

Based on the number of clients (e.g., each with its own IP address) currently tuned into and/or requesting each of the channels, the multicast controller 100 may identify a number (e.g., N, where N may be 10, 100, 1000, etc.) of popular channels to be made available for multicast transmission in an access network. In one example, this determination may be made periodically. In this regard, the number of popular channels may include the channels having the N largest numbers of clients tuned into (streaming) and/or requesting the respective channels at a given time. In another example, the number of popular channels may include the channels for which at least a threshold number of clients are tuned into and/or have requested.

The multicast controller 100 may distribute the list of popular channels (sometimes referred to herein as a list of multicast channels or a list of popular multicast channels) to nodes (e.g., access nodes, termination nodes, multicast servers, designated clients, etc.) within one or more networks periodically (e.g., about every 120 seconds).

The multicast controller 100 also controls the channel map for an access network. The multicast controller 100 may have a software socket (e.g., algorithm and data) for each access network, and may be configured to control multicast channels for each access network independently.

Still referring to FIG. 1, the access network AN1 connects one or more clients (e.g., embedded multicast clients) at one or more customer premises equipments (CPEs) to the IP network 10. According to one or more example embodiments, a CPE may include a gateway, a router, or combination thereof (e.g., cable modem and/or gateway router, a combination thereof, etc.). In the example embodiment shown in FIG. 1, the access network AN1 is a shared media (access) networks (e.g., a cable access network, such as a Data Over Cable Service Interface Specification (DOCSIS) network, Gigabit Passive Optical Networks (GPONs), etc.) in which traffic for all clients travels over a shared physical medium.

The termination node 120 terminates the access network AN1 on the IP network 10. Example termination nodes include cable modem termination systems (CMTSs), in the case of a DOCSIS network, and Optical Line Terminals (OLTs), in the case of GPONs.

Although not shown in FIG. 1, end users may connect to the shared media access network AN1 via respective home networks through, for example, a CPE.

In the example embodiment shown in FIG. 1, clients 102 and 104 are present in the shared media access network AN1. In at least this example embodiment, each of the clients 102 and 104 may be an embedded multicast client running on an electronic device, such as a CPE.

The clients 102 and 104 may receive video content from the content provider 130 via unicast transmission through the IP network 10, termination node 120, and shared media access network AN1. The clients 102 and 104 then deliver the received video content to video content players at one or more end user devices (not shown), such as mobile devices, smartphones, laptops, tablets, personal computers, or the like.

An embedded multicast client functions to join multicast groups and receive multicast content. Each embedded multicast client may include a cache to locally store chunks of video for a given channel (or stream) and video quality (VQ) level (collectively referred to as a Channel/VQ pair). A Uniform Resource Locator (URL) or Uniform Resource Identifier (URI) associated with a chunk or chunks of video may be used to identify (or, alternatively, request) the Channel/VQ pair by using a filtering method on the URL (or URI) character string. Operators may setup a directory hierarchy for content with channel and VQ names to make use of such filtering. By locally storing chunks of video for Channel/VQ pairs in the cache at the embedded multicast client, requests for the Channel/VQ pairs from an end user may be provided without sending a request to the content provider 130.

Although example embodiments are described in most instances with regard to channels, it should be understood that example embodiments are applicable to both channels and Channel/VQ pairs. For example, where example embodiments are discussed and explained with regard to channels, the example embodiments may be similarly applicable to Channel/VQ pairs, rather than channels. Furthermore, a reference to a channel may be indicative of the channel itself or a Channel/VQ pair.

Further, in at least some instances, a chunk of video may be referred to as an asset, and a chunk or chunks of video may be referred to as video content.

According to one or more example embodiments, to facilitate addition and deletion of multicast channels within a shared media access network, and to reduce overhead, a client within a shared media access network may be identified as a "designated client." A designated client is like any other client, except that it receives a list of channels (or Channel/VQ pairs) from the multicast controller periodically and issues multicast joins locally in the access network.

According to at least some example embodiments, a designated client within an access network may manage the channels currently being multicasted (or injected) into the access network (sometimes referred to herein as the set of available multicast channels) by analyzing the list of popular multicast channels provided by the multicast controller 100 to determine whether to request addition or deletion of channels from the set of channels currently being multicasted into the access network. The designated client may request addition or deletion of channels by sending Internet Group Management Protocol (IGMP) join or leave messages to the termination node that terminates the access network on the IP network. IGMP messages allow an access network host to inform a termination node (e.g., a router, gateway, combination thereof, or the like) of its interest in receiving or no longer receiving a particular multicast channel.

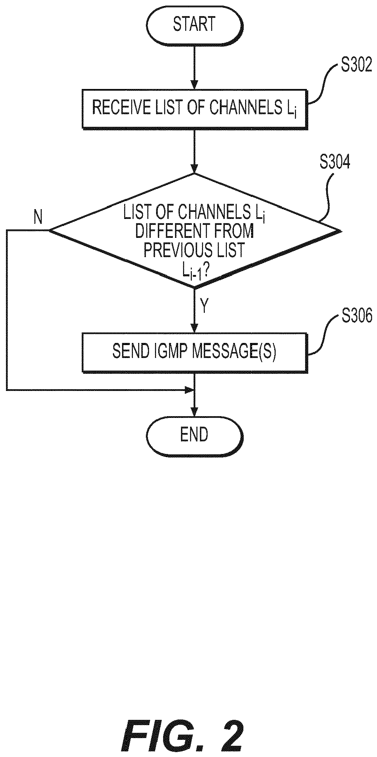

FIG. 2 is a flowchart illustrating an example embodiment of a method of operating a designated client for managing multicast channels in a shared media access network. For example purposes, the example embodiment shown in FIG. 2 will be described with regard to FIG. 1, and more particularly, with regard to an example in which the client 102 in the access network AN1 is the "designated client" within the access network AN1. Further, although the example embodiment shown in FIG. 2 will be described assuming that the access network AN1 is a shared media access network, example embodiments should not be limited to this example.

Although only a single iteration of the method shown in FIG. 2 will be described, it should be understood that this method may be performed iteratively (e.g., periodically) in response to receiving an updated list of multicast channels from the multicast controller 100 (e.g., about every 120 seconds).

Referring to FIG. 2, at step S302 the designated client 102 receives a list of multicast channels *Li* from the multicast controller 100. As discussed above, the list of multicast channels *Li* includes a number of popular channels within the access network AN1. In this example embodiment, *i* is an integer, which serves as an index indicating the current list of multicast channels received from the multicast controller 100.

The multicast controller 100 may send an updated list of popular multicast channels (or Channel/VQ pairs) to each designated client (in different access networks) periodically (e.g., about every 120 seconds). The list may contain channels (or Channel/VQ pairs) that are the most popular in that access network and whose combined bandwidth does not exceed the total allocated bandwidth for such multicast channels in that access network.

At step S304, the designated client 102 determines whether the list of multicast channels *Lᵢ* is different from a prior list of multicast channels, such as the immediately preceding list of multicast channels *L*_{*i*-}*₁.* In one example, the designated client 102 may compare the current list of multicast channels *Li* with the previous list of multicast channels *L*_{*i*-*1*} to determine whether any multicast channels have been added or removed relative to the previous list of multicast channels *L*_{*i*-}*₁.*

If the designated client 102 determines that the list of multicast channels *Li* is the same as the previous list of multicast channels *L*_{*i*-*1*} at step S304, then the process terminates and the designated client 102 waits for the next updated channel list *L*_{*i*+*1*} from the multicast controller 100.

Returning to step S304, if the designated client 102 determines that the list of multicast channels *Lᵢ* is different from the previous list of multicast channels *L*_{*i*-}*₁,* then at step S306 the designated client 102 sends appropriate IGMP messages to the termination node 120 to inform the termination node 120 of the differences, and cause the termination node 120 to begin or stop multicasting the channels into the access network AN1 as necessary.

In one example, if the designated client 102 determines that the updated list of multicast channels *Lᵢ* includes a new channel, which was not included in the previous list of multicast channels *L*_{*i*-}*₁,* then at step S306 the designated client 102 sends an IGMP join message, including the multicast address for the new channel, to the termination node 120.

In response to receiving the IGMP join message, the termination node 120 begins injecting chunks associated with the channel identified in the IGMP join message into the access network AN1, such that chunks associated with the channel may be stored locally at the clients within the access network AN1 and available for access by end users as desired. Each client is also instructed to look for content in a group of multicast streams. In one example, the multicast addresses may be configured (e.g., pre-configured) by a network operator, and include all addresses for possible channels that may be sent to any access network.

In another example, if the designated client 102 determines that the updated list of multicast channels *Li* no longer includes a channel, which was included in the previous list of multicast channels *L*_{*i*-}*₁,* then at step S306 the designated client 102 sends an IGMP leave message, including the multicast address for the removed channel, to the termination node 120.

In response to receiving the IGMP leave message, the termination node 120 stops injecting the chunks of the removed channel into the access network AN1. Accordingly, chunks associated with the removed channel are no longer available for storing locally at clients within the access network AN1.

Although not shown in FIG. 2, upon receipt of an initial list of multicast channels from the multicast controller 100, the designated client 102 may issue IGMP join messages for each of the multicast channels in the list.

By utilizing a designated client to manage the channels available for multicast transmission within an access network, as in the example embodiment shown in FIG. 2, only the designated client needs to be modified to communicate with the multicast controller, whereas other clients may be standard clients with multicast transmission capability and that simply listen in to the (e.g., pre-configured) list of multicast channels. Also, the termination node may be any standard termination node that has IGMP functionality.

Returning to FIG. 1, as mentioned above, the network architecture includes a non-shared media access network portion 1400. In this example, the non-shared media access network portion 1400 includes an IP router 121 in two-way communication with the DSLAM 122, which is in two-way communication with the DSL network AN2. The DSL network AN2 is an example of a non-shared media (access) network in which each customer may have a different associated physical medium.

A DSL network, such as DSL network AN2, transmits digital data over telephone lines. A DSLAM is a network device that connects multiple clients (e.g., customer DSL modems/routers) to a high-speed digital communications channel using multiplexing techniques. In the example shown in FIG. 1, the DSLAM 122, among other things, provides access to the IP network 10 through the IP router 121. As shown in FIG. 1, clients 106 and 108 are present in the DSL network AN2.

Although example embodiments will be discussed herein with regard to a DSL network and clients 106 and 108, it should be understood that example embodiments are applicable to other non-shared media networks, and the DSL network may include any number of clients. Another example of a non-shared media access network may include an Ethernet switch with connections to a home or office, often located at the bottom of a building.

In the example embodiment shown in FIG. 1, the clients 106 and 108 may be embedded multicast clients running on electronic devices, such as CPEs (e.g., DSL modems and/or routers), which terminate a DSL circuit from the DSLAM 122, and provide a local area network (LAN) interface to end users (e.g., computers, or other devices). The clients 106 and 108 at respective CPEs interface with the DSLAM 122.

According to at least some example embodiments, the clients 106 and 108 may be embedded multicast capable clients similar to those discussed above, except that the clients 106 and 108 may receive the video content from the content provider 130 via unicast transmission (e.g., unicast ABR) through the IP network 10, IP router (northbound node) 121, DSLAM 122, and DSL network AN2 or via multicast transmission through the multicast server 140, the IP network, the IP router 121, DSLAM 122, and DSL network AN2.

In addition to any and all conventional functionality, according to at least some example embodiments, the DSLAM 122 also maintains a list of multicast channels for the DSL network AN2. The list of multicast channels may be the same or substantially the same as the list of multicast channels maintained at the designated client 102 discussed above with regard to FIGS. 1 and 2, and may be updated periodically by the multicast controller 100 in the same or substantially the same manner as discussed above with regard to FIG. 2.

Example functionality of the DSLAM 122 and the clients in the DSL network AN2 will be discussed in more detail below.

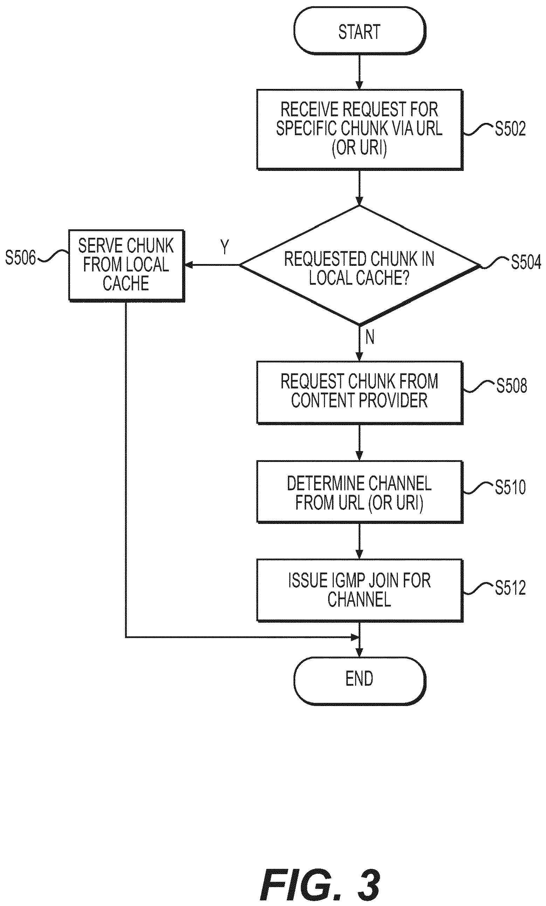

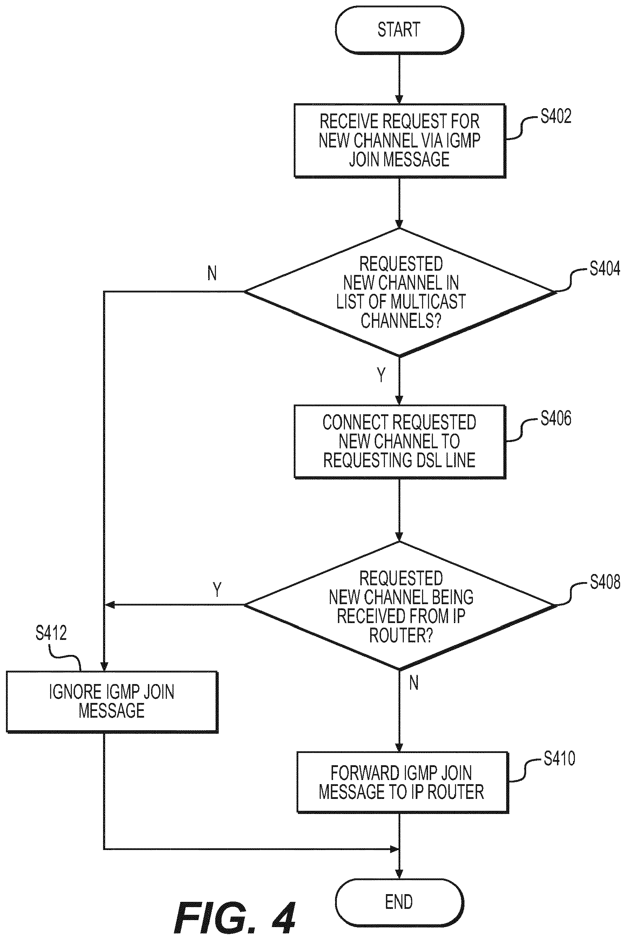

FIG. 3 is a flow chart illustrating an example embodiment of a method of operating a client for managing multicast channels in a non-shared media access network. FIG. 4 is a flowchart illustrating an example embodiment of a method of operating a DSLAM for managing multicast channels in a non-shared media access network. For example purposes, the example embodiments shown in FIGS. 3 and 4 will be described with regard to the non-shared media access network portion 1400 shown in FIG. 1, and in some cases, with regard to the client 106. However, example embodiments should not be limited to this example.

Referring to FIG. 3, at step S502, the client 106 receives a request for a specific chunk of video content in the form of a URL (or URI) from an end user (e.g., via a video player running on the end user device).

In response to receiving the request, at step S504 the client 106 determines whether the requested chunk is stored in its local cache.

If the client 106 locates the requested chunk in its local cache at step S504, then at step S506 the client 106 serves/provides the requested chunk to the end user (e.g., via a media player) from the local cache.

Returning to step S504, if the requested chunk is not present in the local cache at the client 106, then at step S508 the client 106 requests the chunk (e.g., directly) from the content provider 130. In this case, the content provider 130 may send the URL (or URI) identifying the requested chunk to the content provider 130, and the content provider 130 may deliver the requested video content to the client 106 via unicast transmission (e.g., unicast ABR).

Still referring to FIG. 3, after requesting the chunk from the content provider, at step S510 the client 106 filters the URL (or URI) for the requested chunk to identify the channel associated with the requested chunk. As discussed above, the URL (or URI) may be used to identify the channel by using a filtering method on the character string of the URL (or URI). The client 106 may obtain the multicast address of the channel based on the filtered character string from the URL (or URI) by searching a table listing the multicast address for each channel string. In one example, the table may be a pre-configured table stored at the client 106.

At step S512, the client 106 then generates and sends an IGMP join message for the identified (new) channel northbound to the DSLAM 122, and the process at the client 106 terminates.

Referring now to FIG. 4, at step S402 the DSLAM 122 identifies the IGMP join message from the client 106 via an IGMP snooping function.

In response to identifying the IGMP join message, at step S404 the DSLAM 122 determines whether the channel identified in the IGMP join message is in the current list of multicast channels at the DSLAM 122. As discussed above, the current list of multicast channels is provided periodically by the multicast controller 100, and includes a list of popular channels within the DSL network AN2.

Still referring to FIG. 4, if the requested channel is not in the list of multicast channels at the DSLAM 122 at step S404, then the DSLAM 122 ignores the IGMP join message at step S412, and the process terminates.

Returning to step S404, if the channel identified in the IGMP join message is in the list of multicast channels at the DSLAM 122, then at step S406 the DSLAM 122 connects the channel identified in the IGMP join message to the DSL line corresponding to the client 106, such that chunks for the channel identified in the IGMP join message received at the DSLAM 122 may be injected into the DSL line, and available in the local cache at the client 106 going forward.

At step S408 the DSLAM 122 determines whether the chunks for the channel identified in the IGMP join message are currently flowing to the DSLAM 122 through the IP router 121.

In one example, the DSLAM 122 has knowledge of all channels flowing there through by virtue of the IGMP snooping function used to snoop on all IGMP join messages, which contain the multicast address. Based on information obtained through the IGMP snooping function, the DSLAM 122 connects the appropriate DSL line to the appropriate multicast address. The DSLAM 122 stores the correspondence between each multicast address and the corresponding DSL lines to which the multicast address is connected. In one example, at step S408, the DSLAM 122 consults this table to determine the whether the chunks for the channel (multicast address) identified in an IGMP join message are flowing to the DSLAM 122. If the channel (multicast address) is identified in the table, then the chunks for that channel are flowing to the DSLAM 122.

If the chunks for the channel identified in the IGMP join message are currently being received through the IP router 121, then the process proceeds to step S412 at which the DSLAM 122 ignores the IGMP join message as discussed above, and the process terminates.

Returning to step S408, if the chunks for the channel identified in the IGMP join message are not currently flowing through the IP router 121, then the DSLAM 122 forwards the IGMP join message to the IP router 121 at step S410.

In response to receiving the IGMP join message, the IP router 121 begins to allow (inject) chunks for the channel identified in the IGMP join message to flow through to the DSLAM 122.

According to at least some example embodiments, each time the DSLAM 122 receives an updated list of allowed channels from the multicast controller 100, the DSLAM 122 may perform a method similar to that discussed above with regard to FIG. 2, except that the IGMP messages (e.g., IGMP join or leave messages) are sent to the IP router 121, rather than the termination node 120 as described above. Because of the similarities in the functionality, a more detailed discussion will not be repeated here.

In this example, in response to receiving the IGMP join message, the IP router 121 begins providing chunks associated with the channel identified in the IGMP join message to the DSLAM 122, such that chunks associated with the channel are available to be provided for caching locally at the clients on-demand (e.g., in response to requests from clients).

On the other hand, in response to receiving an IGMP leave message, including a multicast address for a removed channel, the IP router 121 stops allowing the chunks for the removed channel to flow through to the DSLAM 122.

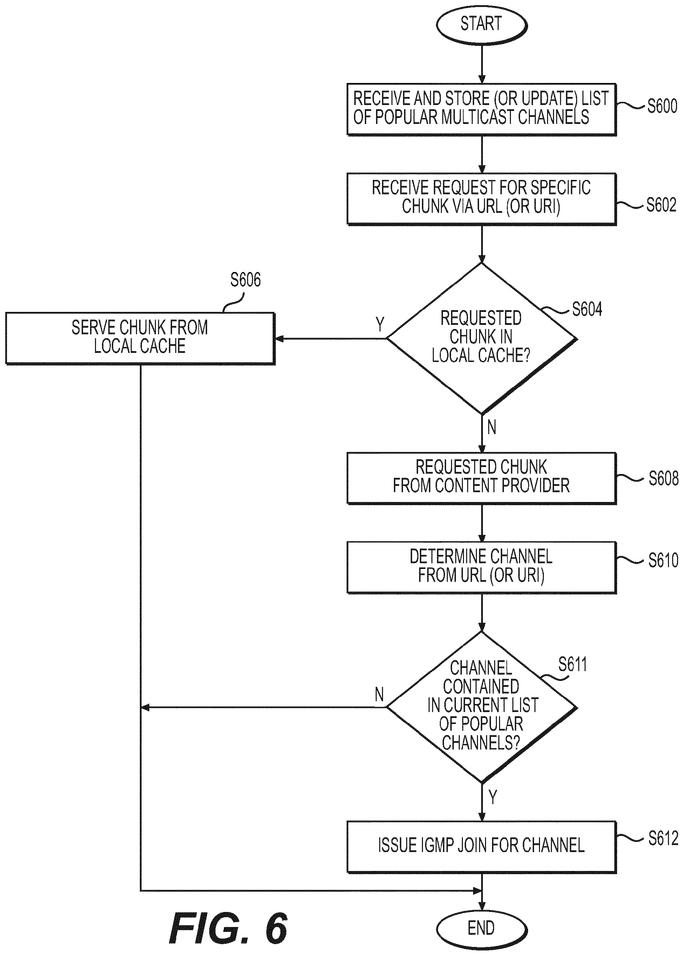

According to one or more other example embodiments, a plurality of clients (e.g., each client) in each access network may receive the list of popular multicast channels from the multicast controller 100. In this example, when a client is to issue an IGMP join for a requested channel, the client consults the list of popular channels to determine whether to issue the IGMP join message. This example embodiment will be discussed in more detail below with regard to FIG. 6.

FIG. 6 is a flowchart illustrating another example embodiment of a method of operating a client for managing multicast channels in an access network. For example purposes, the example embodiment shown in FIG. 6 will be described with regard to FIG. 1, and more particularly, with regard to client 102 in the access network AN1. Although the example embodiment shown in FIG. 6 will be described again assuming that the access network AN1 is a shared media access network, example embodiments should not be limited to this example.

Further, although only a single iteration of the method shown in FIG. 6 will be described, it should be understood that this method may be performed iteratively (e.g., periodically) in response to receiving an updated list of multicast channels from the multicast controller 100 (e.g., about every 120 seconds). Moreover, it should be understood that the same or a similar method may be performed at each client in an access network.

Referring to FIG. 6, at step S600 the client 102 receives (e.g., directly receives) and stores a current list of popular multicast channels from the multicast controller 100. The multicast controller 100 may send the list of popular multicast channels as discussed above with regard to step S302 in FIG. 2. In one example, the multicast controller 100 may broadcast the list of popular multicast channels to clients in each access network. If a previous list is present at the client 102, then the client may update the previous list as discussed herein.

At step S602, the client 102 receives a request for a specific chunk of video content in the form of a URL (or URI) from an end user (e.g., via a video player running on the end user device). The client 102 may receive the request for a specific chunk in the same or substantially the same manner as discussed above with regard to step S502 in FIG. 3.

In response to receiving the request, at step S604 the client 102 determines whether the requested chunk is stored in its local cache. The client 102 determines whether the requested chunk is stored in its local cache in the same or substantially the same manner as discussed above with regard to step S504 in FIG. 3.

If the client 102 locates the requested chunk in its local cache at step S604, then at step S606 the client 106 serves/provides the requested chunk to the end user (e.g., via a media player) from the local cache in the same or substantially the same manner as discussed above with regard to step S506 in FIG. 3.

Returning to step S604, if the requested chunk is not present in the local cache at the client 102, then at step S608 the client 102 requests the chunk (e.g., directly) from the content provider 130 in the same or substantially the same manner as discussed above with regard to step S508 in FIG. 3.

After requesting the chunk from the content provider, at step S610 the client 102 filters the URL (or URI) for the requested chunk to identify the channel associated with the requested chunk in the same or substantially the same manner as discussed above with regard to step S510 in FIG. 3.

After identifying the channel associated with the requested chunk, at step S611 the client 102 examines the list of popular channels received at step S600 to determine whether the channel associated with the requested chunk is contained in the list of popular multicast channels.

If the channel associated with the requested chunk is included in the list of popular multicast channels, then at step S612 the client 102 issues an IGMP join message for the channel in the same or substantially the same manner as discussed above with regard to step S512 in FIG. 3.

Returning to step S611, if the channel associated with the requested chunk is not included in the list of popular multicast channels, then the client 102 does not issue an IGMP join message for the channel and the process terminates. In this regard, the client 102 may issue the IGMP join message only if the channel associated with the requested chunk is included in the list of popular multicast channels.

According to one or more example embodiments, the architecture of at least the non-shared media network portion 1400 shown in FIG. 1 may be implemented using a device control protocol such as Software Defined Network (SDN) OpenFlow architecture, in which a SDN controller performs functionality similar to the designated client 102 and/or DSLAM 122 discussed above.

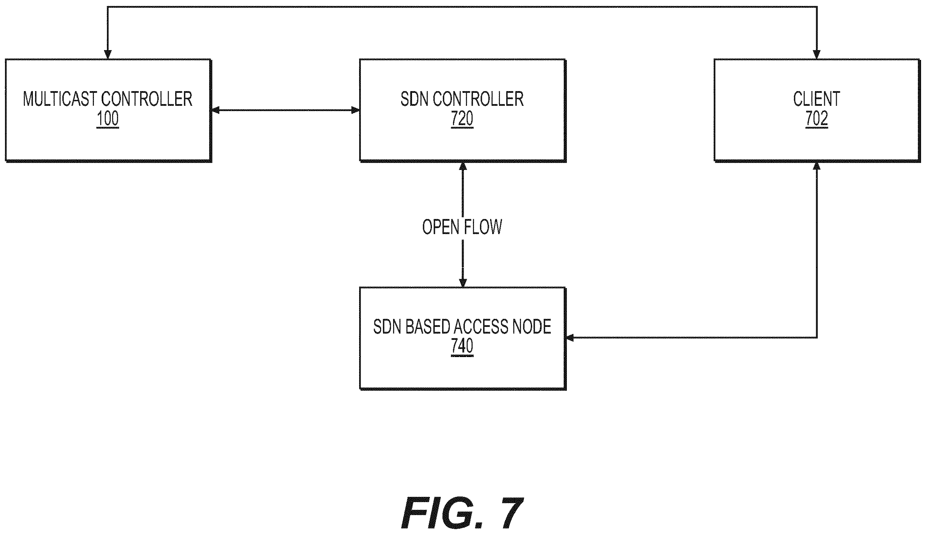

FIG. 7 is a simplified block diagram illustrating an example embodiment of a network architecture implemented using SDN OpenFlow.

Referring to FIG. 7, the network architecture includes a multicast controller 100, a SDN controller 720, and a SDN-based access node 740. A client 702 is present in the access network provided by the architecture shown in FIG. 7.

The multicast controller 100 is the same as the multicast controller 100 shown in FIG. 1, and the client 702 is the same or substantially the same as one or more of the clients 102, 104, 106 and 108 shown in FIG. 1. Thus, a detailed discussion of the multicast controller 100 and the client 702 will not be repeated here.

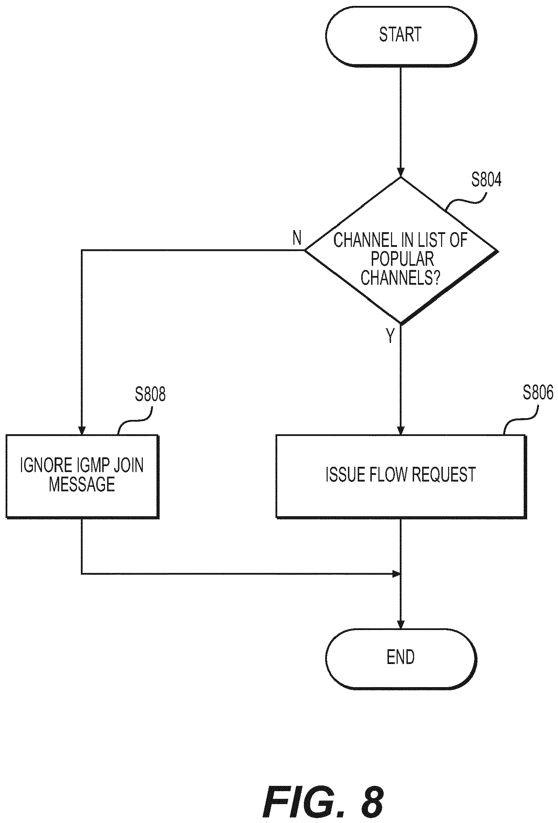

In the example embodiment shown in FIG. 7, interface to the SDN controller 720 and the SDN-based access node 740 may be implemented using a network device control protocol such as, for example, OpenFlow Switch Specification Version 1.4.0. In this example embodiment, the network device control protocol is referred to as OpenFlow for ease of understanding. Example functionality of the SDN controller 720 will be discussed in more detail below with regard to FIG. 8, which is a flow chart illustrating an example embodiment of a method for managing multicast channels at the SDN controller 720 shown in FIG. 7.

In FIG. 7, when the client 702 decides to issue an IGMP join message (e.g., via the process discussed above with regard to FIGS. 3 and/or 6), the client 702 issues the IGMP join message to the SDN-based access node 740 on a given access line (e.g., DSL line). The client 702 may decide to issue, and then issue, the IGMP join message in the same or substantially the same manner as discussed above with regard to FIGS. 2, 3 and/or 6.

In response to receiving the IGMP join message from the client 702 on a given access line (e.g., a DSL line), the SDN-based access node 740 informs the SDN controller 720 of the received IGMP join message. In one example, the SDN-based access node 740 may forward the received IGMP join message to the SDN controller 720 over the OpenFlow interface between the SDN controller 720 and the SDN-based access node 740.

As mentioned above, FIG. 8 is a flow chart illustrating an example embodiment of a method of managing multicast channels at the SDN controller 720 shown in FIG. 7.

Referring to FIGS. 7 and 8, in response to being informed of the received IGMP join message, at step S804 the SDN controller 720 determines whether the channel identified in the received IGMP join message is in the list of popular multicast channels for the access network. The SDN controller 720 determines whether the channel is in the list of popular multicast channels in the same or substantially the same manner as discussed above with regard to step S404 in FIG. 4 and/or step S611 in FIG. 6. In the example embodiment shown in FIG. 7, the multicast controller 100 may send (e.g., periodically) the list of popular multicast channels to the SDN controller 720 in the same or substantially the same manner as discussed above with regard to step S302 in FIG. 2.

If the channel is in the list of popular multicast channels, then at step S806 the SDN controller 720 issues a flow request to modify the flow table in the SDN-based access node 740 so that the multicast flow for the channel identified in the IGMP join message is provided to the access line (e.g., DSL line) for the client 702. In one example, the SDN controller 720 may issue one or more modify flow table messages as discussed in the OpenFlow Switch Specification Version 1.4.0.

Returning to step S804, if the channel identified in the received IGMP join message is not in the list of popular multicast channels for the access network, then at step S808 the SDN controller 720 does not issue a flow request and the IGMP join message is ignored. The process then terminates and the SDN controller 720 awaits information regarding receipt of another IGMP join message at the SDN-based access node 740.

Although FIG. 1 illustrates only one shared media access network AN1 and one non-shared media access network AN2, and only two clients within each network, example embodiments should not be limited to this example. Rather, the networks may include any number of access networks including any number of clients connected thereto.

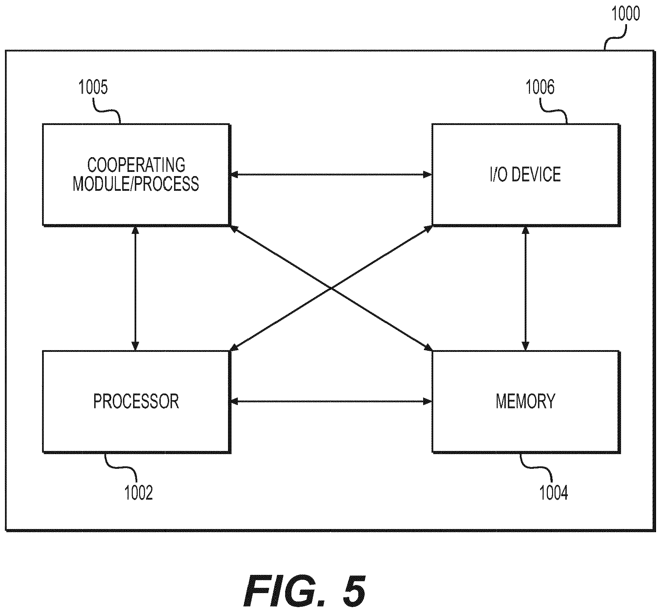

FIG. 5 depicts a high-level block diagram of a computer or computing device suitable for use in implementing, *inter alia,* the clients 102, 104, 106, 108, the DSLAM 122, the SDN controller 720, and/or the SDN-based access node 740. Although not specifically described herein, the general architecture and functionality shown in FIG. 5 may also be suitable for implementing one or more of the multicast server, the multicast controller, the termination nodes, the IP router, the content provider, gateways, end user devices, etc.

Referring to FIG. 5, the computer 1000 includes one or more processors 1002 (e.g., a central processing unit (CPU) or other suitable processor(s)) and a memory 1004 (e.g., random access memory (RAM), read only memory (ROM), and the like). The computer 1000 also may include a cooperating module/process 1005. The cooperating process 1005 may be loaded into memory 1004 and executed by the processor 1002 to implement functions as discussed herein and, thus, cooperating process 1005 (including associated data structures) may be stored on a computer readable storage medium (e.g., RAM memory, magnetic or optical drive or diskette, or the like). The memory 1004 may also include a local cache as discussed herein.

The computer 1000 also may include one or more input/output devices 1006 (e.g., a user input device (such as a keyboard, a keypad, a mouse, and the like), a user output device (such as a display, a speaker, and the like), an input port, an output port, a receiver, a transmitter, one or more storage devices (e.g., a tape drive, a floppy drive, a hard disk drive, a compact disk drive, and the like), or the like, as well as various combinations thereof).

Example embodiments are discussed herein with regard to the use of the IGMP protocol as an example for a multicast signaling protocol. However, other multicast signaling protocols such as Multicast Listener Discovery (MLD) may be used. Rather than a join message as in IGMP, MLD uses the term multicast listener report, and rather than an IGMP leave message, MLD uses the term multicast listener done message.

While one or more example embodiments will be described from the perspective of the clients, termination nodes, multicast controller, or other applicable device, it will be understood that one or more example embodiments discussed herein may be performed by the one or more processors (or processing circuitry) at the applicable device.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

Reference is made in detail to embodiments, examples of which are illustrated in the accompanying drawings, wherein like reference numerals refer to the like elements throughout. In this regard, the example embodiments may have different forms and should not be construed as being limited to the descriptions set forth herein. Accordingly, the example embodiments are merely described below, by referring to the figures, to explain example embodiments of the present description. Aspects of various embodiments are specified in the claims.

## Claims

1. A client device (102, 104, 106, 108, 110, 112) in an access network (AN1, AN2, AN3), which terminates on a core network (10) via a termination node (120, 122), the client device comprising:
a memory (1004) storing computer-readable instructions; and
one or more processors (1002) coupled to the memory, the one or more processors configured to execute the computer-readable instructions to
receive a list of multicast channels from a multicast controller (100), the list of multicast channels identifying multicast channels to be multicast to a plurality of clients in the access network,
receive an updated list of multicast channels from the multicast controller,
identify differences between the list of multicast channels and the updated list of multicast channels, and
inform the termination node of differences between the list of multicast channels and the updated list of multicast channels.

2. The client device of claim 1, wherein the one or more processors are further configured to execute the computer-readable instructions to
compare the list of multicast channels with the updated list of multicast channels to identify multicast channels that have been added to the list of multicast channels.

3. The client device of claim 2, wherein the one or more processors are further configured to execute the computer-readable instructions to send a message to the termination node to inform the termination node of the multicast channels that have been added to the list of multicast channels, the message including multicast addresses for the multicast channels added to the list of multicast channels.

4. The client device of claim 1, wherein the one or more processors are further configured to execute the computer-readable instructions to
compare the list of multicast channels with the updated list of multicast channels to identify multicast channels that have been removed from the list of multicast channels; and
send a message to the termination node to inform the termination node of the multicast channels that have been removed from the list of multicast channels, the message including multicast addresses for the multicast channels removed from the list of multicast channels.

5. The client device of claim 4, wherein the message is one of an IGMP leave message or a (MLD) multicast listener done message.

6. The client device of claim 3, wherein the message is one of an Internet Group Management Protocol, IGMP, join message or a MLD multicast listener report.

7. The client device of claim 1, wherein the list of multicast channels further includes video quality levels for the multicast channels.

8. An access node (120, 122) configured to communicate with a northbound node and an access network (AN1, AN2, AN3), the access node comprising:
a memory (1004) storing computer-readable instructions; and
one or more processors (1002) coupled to the memory, the one or more processors configured to execute the computer-readable instructions to
identify a request for a multicast channel within the access network, from a client (102C) in the access network,
determine that the multicast channel is in a list of multicast channels for the access network, in response to identifying the request for the multicast channel within the access network, and
stream the multicast channel to the client in the access network based on the determination that the multicast channel is in the list of multicast channels for the access network.

9. The access node of claim 8, wherein the one or more processors are further configured to execute the computer-readable instructions to
determine that the multicast channel is not in the list of multicast channels for the access network, and
ignore the request for the multicast channel based on the determination that the multicast channel is not in the list of multicast channels for the access network.

10. The access node of claim 8, wherein the one or more processors are further configured to execute the computer-readable instructions to
determine that the multicast channel is not being received through the northbound node; and
issue a message to the northbound node in response to determining that the multicast channel is not being received through the northbound node.

11. The access node of claim 8, wherein
the access node is a Digital Subscriber Line Access Multiplexer, and the access network is a DSL network;
the one or more processors are further configured to execute the computer-readable instructions to
allow streaming of the multicast channel to the client in the access network by connecting the multicast channel to a DSL line corresponding to the client.

12. The access node of claim 8, wherein the access node is implemented using software defined networking (SDN).

13. The access node of claim 12, wherein the one or more processors are further configured to issue a flow request to cause the multicast channel to be streamed to the client in the access network, based on the determination that the multicast channel is in the list of multicast channels for the access network.

14. The access node of claim 8, wherein the access network is a non-shared media access network.
